## Europäisches Patentamt

## European Patent Office

## Office européen des brevets

(11) Veröffentlichungsnummer : **0 076 997**
**B1**

(12)
# EUROPÄISCHE PATENTSCHRIFT

(45) Veröffentlichungstag der Patentschrift :
23.12.87

(51) Int. Cl.⁴ : **B 23 H  1/00**

(21) Anmeldenummer : **82109140.2**

(22) Anmeldetag : **04.10.82**

(54) Verfahren und Vorrichtung zur Bearbeitung von metallgebundenen nichtleitenden Werkstoffen.

(30) Priorität : **28.05.82 DE 3220207
05.10.81 EP 81107929**

(43) Veröffentlichungstag der Anmeldung :
**20.04.83 Patentblatt 83/16**

(45) Bekanntmachung des Hinweises auf die Patenterteilung : **23.12.87 Patentblatt 87/52**

(84) Benannte Vertragsstaaten :
**AT BE CH DE FR GB IT LI NL SE**

(56) Entgegenhaltungen :
**FR-A- 1 452 631
FR-A- 2 374 439
US-A- 2 974 215
US-A- 3 122 628
US-A- 3 420 759**

(73) Patentinhaber : **LACH-SPEZIAL-Werkzeuge GmbH
Bruchköbeler Landstrasse 39-41
D-6450 Hanau/Main (DE)**

(72) Erfinder : **Lach, Horst
Dammstrasse 5
D-6450 Hanau 1 (DE)**

(74) Vertreter : **Jochem, Bernd, Dipl.-Wirtsch.-Ing.
Patentanwälte Beyer & Jochem Postfach 17 01 45
D-6000 Frankfurt/Main (DE)**

## Beschreibung

Die vorliegende Erfindung betrifft ein Verfahren zum Bearbeiten von metallgebundenen Werkstücken aus nichtleitenden Hartmaterialien. Unter Bearbeitung wird hierbei die Veränderung der Form oder des Zustandes des betreffenden Werkstoffes verstanden. Es kann sich um Trennen, Formen oder Nachformen, um Schärfen oder Nachschärfen handeln.

Die metallgebundenen Werkstücke aus nichtleitendem Material können Werkzeuge oder Teile von Werkzeugen sein, deren Hartmaterial aus polykristallinen synthetischen Diamanten, Bornitriden, Oxidkeramik oder ähnlichem bestehen. Die Werkzeuge können Sägen, Schneiden, Drehwerkzeuge, Meißel, Bohrer, Fräser, Abrichtblöcke, Abrichtrollen oder Schleifscheiben oder ähnliches sein.

Die hochfesten Eigenschaften dieser Materialien, denen die hieraus hergestellten Werkzeuge gegenüber anderen Werkzeugen ihre Überlegenheit hinsichtlich langer Standzeiten und kurzer Arbeitsschritte verdanken, führen bei der Herstellung oder beim Nachschleifen dieser Werkzeuge zu Schwierigkeiten. Beim Herstellen oder Nacharbeiten derartig hochwertiger Werkzeuge machen sich die im Einsatz positiven Materialeigenschaften negativ bemerkbar und stellen den Hersteller derartiger Werkzeuge vor erhebliche Probleme. Deshalb wird immer wieder danach gesucht, besondere Methoden für die Herstellung und Nacharbeitung dieser Werkzeuge verfügbar zu machen, die auch den Forderungen der Wirtschaftlichkeit und Präzision gerecht werden. In diesem Sinne sind zahlreiche Verfahren bekannt geworden, die besonderen Werkzeugmaterialien wie künstliche Diamanten oder ähnliches zu formen.

In jüngster Zeit sind Versuche gemacht worden, die zumeist von Natur aus nicht leitfähigen hochfesten Werkstoffe elektrisch zu bearbeiten. Entweder sind die nichtleitfähigen Kristalle in einem umständlichen Verfahren soweit mechanisch aufbereitet worden, daß beispielsweise zusätzlich zum Bohren nachträglich eine elektrische Entladung angewendet werden kann (US-PS 2 552 582, DE-PS 856 874) oder es werden schmal parallel geführte Drahtelektroden dicht an einen Diamanten herangeführt oder mit diesem in Kontakt gebracht (US-PS 4 103 137). Diese Versuche führten nicht zu einer industriellen Fertigung von Werkzeugen. Ihre Anwendungen beschränkten sich auf Sonderaufgaben, wie sie sich beispielsweise in der Raumfahrt ergeben.

Es sind auch Verfahren bekannt, um elektro- oder funkenerosiv das metallische Bindemittel zwischen den Kristallen künstlicher Diamanten während der Bearbeitung anzugreifen, was insbesondere bei der Herstellung oder dem Nacharbeiten von Schneidflächen aus polykristallinen synthetischen Diamanten Vorteile bringt (EP-B-10 276 oder EP-B-6827). Bis zu bestimmten Schnittgüten kann die hierbei auftretende Oberflächenrauhigkeit sogar nützlich sein. Werden aber höhere Oberflächenqualitäten verlangt, sind diese Oberflächenrauhigkeiten, die aus der Verteilung und Größe der Hartmaterialanteile in der Metallbindung resultieren, nicht mehr vertretbar.

Aus US-A-3 122 628 ist es bekannt, eine kombinierte mechanische und elektroerosive Abtragung mittels eines einzigen rotierenden Werkzeugs vorzunehmen.

Es ist deshalb Aufgabe der vorliegenden Erfindung, ein Verfahren und eine Vorrichtung verfügbar zu machen, um die eingangs beispielhaft aufgezählten Werkzeuge mit metallgebundenen nichtleitenden hochfesten Werkstoffen mit bearbeiteten Wirkflächen herzustellen oder nachzuarbeiten, von denen eine noch höhere Oberflächengüte verlangt wird.

Die Lösung dieser Aufgabe besteht erfindungsgemäß in einfacher Weise darin, daß gegenüber dem Werkstück als einer Elektrode im elektro- oder funkenerosiven System als zweite Elektrode ebenfalls ein metallgebundenes Werkzeug, vornehmlich ein Schleifwerkzeug, benutzt wird, welches selbst in der Metallbindung hochfeste, nichtleitende Hartmaterialien wie Diamanten oder synthetische Diamanten aufweist, wobei es zwischen der rotierenden zweiten Elektrode und dem Werkstück zunächst nicht zu einer mechanischen Berührung kommt, sondern über einen eingestellten kleinen Abstand zu einem aus dem Werkstück Material abtragenden Funkenüberschlag. Es ist zwar bekannt, für reine Metallbearbeitung, jedoch nicht für die Bearbeitung von Werkstücken mit polykristallinen synthetischen Diamanten, bewegte Metallteile als eine Elektrode einzusetzen. So werden beim elektroerosiven Senken in Metall rotierende Kupferelektroden benutzt. Das sich drehende Metallteil wirkt hierbei ausschließlich elektrisch. Durch die Rotation wird der Funken verteilt und eine Überhitzung der Elektrode vermieden. Es kommt niemals zu einer Berührung zwischen Elektrode und dem Werkstück. Eine solche Berührung wird sogar durch komplizierte Steuerung vermieden, um eine Zerstörung oder Verformung der rotierenden Elektroden, die aus einem weichen Metall besteht, zu vermeiden.

Ferner ist es für die reine Metallbearbeitung bekannt, Drahtfunkenerosionsmaschinen einzusetzen, bei welchen der im wesentlichen aus Kupfer bestehende dünne Draht in Richtung seiner Achse schnell bewegt wird. Aber auch hierbei kommt es nicht zu einer Berührung zwischen dem Metallwerkstück und dem als Elektrode benutzten Draht.

Setzt man dagegen gemäß der vorliegenden Erfindung gegenüber sehr harten Werkstoffen, wie z. B. polykristallinen synthetischen Diamanten, die zu Werkzeugen verformt werden sollen, als Elektrode ein sich bewegendes, beispielsweise rotierendes Werkzeug ein, welches normalerweise dazu dient, unter Berührung mit dem Werkstück Material mechanisch abzutregen und steuert dieses Werkzeug wie eine Elektrode derartig, daß es zunächst nicht zu einer mechanischen Berührung kommt, sondern über einen eingestellten kleinen Abstand zu einem aus dem Werkstück Materiel abtragenden Funkenüberschlag, dann lassen sich auf diese Weise die gewünschten hohen Oberflächenqualitäten im industriellen Umfang wirtschaftlich herstellen. Eine genaue Erklärung für den hierbei wirksam werdenden Vorgang läßt sich noch nicht geben. Es ist aber vermutlich so, daß die elektrischen Entladungen zwischen dem metallischen Anteil des rotierenden Werkzeugs und dem metallischen Teil des normalerweise stillstehenden Werkstücks, das zu einem Werkzeug ausgeformt werden soll, zunächst die metallische Bindung, welche die eingebetteten nichtleitenden Hartmaterialien umgibt, mit der gewünschten Tiefe entfernt. Da die nichtleitenden kleinen polykristallinen Partikel von der elektrischen Ladung nicht oder nur indirekt von der Entladung, zu den unmittelbar benachbarten metallischen Feldern erfaßt werden, bleiben diese als kleine Reste in Form von Erhebungen stehen und werden in einem kurzen Augenblick vom rotierenden Werkzeug mechanisch erfaßt und gebrochen. In diesem kurzen Augenblick der mechanischen Berührung mit einem sehr kleinen Partikel findet an dieser Stelle keine Entladung statt. Hierbei kann es womöglich vorkommen, daß gleichzeitig mit dem mechanischen Erfassen einer aus der Metallbindung freigelegten nichtleitenden Erhebung eine Entladung die umgebenden metallischen Felder umfaßt, wodurch der mechanische Abtrag begünstigt oder beschleunigt wird.

Insofern besteht ein erheblicher Unterschied zu der aus der US-PS 4 236 985 bekannten Bearbeitungstechnik, bei der ein Flächenschleifen eines reinen Metallstückes stattfindet. Außer diesem Unterschied wird hierbei die benutzte Schleifscheibe mit einem angelegten elektrischen Potential in ständigem mechanischen Kontakt mit der zu bearbeitenden Fläche gehalten. Es wird deshalb nur im Grenzbereich der kontinuierlichen mechanischen Bearbeitung zu Entladungen kommen. Außerdem wird der Wirkungsgrad der zusätzlichen Entladung nicht sehr groß sein, da die elektrisch leitende Schleifscheibe ständig in Kurzschlußverbindung mit dem Werkstück steht. Bemerkenswerterweise gilt dies auch für den Teil der bekannten Technik, mit dem die mechanische Schleifscheibe gleichzeitig oder alternativ elektroerosiv nachbearbeitet wird, da diese Nachbearbeitungselektrode ständig auf die Schleifscheibe mit einer Feder gedrückt wird.

Während nach der bekannten Technik entweder mit einer festen Elektrode im sogenannten Senkverfahren gearbeitet wird oder für die funkenerosive Bearbeitung das aus der Metallbearbeitungstechnik bekannte Draht-Funkenerodieren zum Schneiden von bestimmten Profilen innerhalb einer elektrischen Elektrolytflüssigkeit verwendet wird, richtet sich das Verfahren gemäß der vorliegenden Erfindung darauf, daß längs einer zu bearbeitenden Fläche, die mit polykristallinen künstlichen Diamanten bestückt ist, ein rotierendes oder sich schnell bewegendes Werkzeug als zweite Elektrode zunächst berührungslos vorbeigeführt wird.

Erst wenn aus dem Strom zum Funken oder aus der Funkenspannung ein Signal gewonnen wird, das anzeigt, daß zeitlich oder örtlich kein elektroerosiver Abtrag mehr möglich ist, dann wird ein mechanischer Abrieb wirksam, der aber vom selben Werkzeug ausgeht. Deshalb ist das Werkzeug einerseits metallisch und elektrisch leitend, andererseits aber auch mechanisch erosiv. Hierfür eignen sich die künstlichen Werkstoffe wie polykristalline Diamanten, in denen der nichtleitende Anteil mechanisch erosiv und der leitende Anteil elektrisch erosiv wirkt. Die schnelle Bewegung des Werkzeugs über dem Werkstück sorgt dafür, daß beide Bearbeitungsmethoden schnell und übergangslos für alle Stellen des zu bearbeitenden Werkstücks zur Verfügung stehen. Es können feinste Profile hergestellt werden. Jede Kontur läßt sich herstellen oder bearbeiten.

Um dieses Verfahren auszuführen, kann es zweckmäßig sein, eine allseits geschlossene Wanne zu benutzen, um zu verhindern, daß die von dem rotierenden Werkzeug weggeschleuderte Flüssigkeit, die an der Bearbeitungsstelle erforderlich ist, aus der Vorrichtung austritt. Nach einer Ausgestaltung der Erfindung kann mit der Bearbeitungsflüssigkeit der die Bearbeitungsstelle umgebende Raum so vollständig geflutet werden, daß das rotierende Werkzeug vollständig eintaucht.

Das rotierende Bearbeitungswerkzeug kann eine metallgebundene Schleifscheibe sein, die ihrerseits auch Diamanten enthalten kann. Diese Diamanten können ihrerseits gleichfalls polykristalline künstliche Diamanten sein, so daß zusätzlich zur funkenerosiven Bearbeitung zwischen dem rotierenden Werkzeug und der zu bearbeitenden Werkzeugfläche ein Schleifvorgang stattfindet. Für diesen Zweck wird das rotierende Werkzeug längs zur Ausdehnungsrichtung der zu bearbeitenden Fläche geführt. Während die funkenerosive Bearbeitung die elektrisch leitfähigen Teile der Bindung erfaßt, können überstehende, nichtleitende Teile wie in einem üblichen Schleifvorgang gleichzeitig bearbeitet werden. Dies führt zu besonders guten Bearbeitungsergebnissen, die jedes Nacharbeiten überflüssig machen.

An dieser Stelle sei darauf hingewiesen, daß es sich bei dem Verfahren gemäß der vorliegenden Erfindung um ein echtes elektroerosives Bearbeiten handelt. Es handelt sich nicht um ein elektrolytisches Schleifen. Anstelle des für die Funkenerosion üblichen Elektrolyten kann jede andere Flüssigkeit für den erforderlichen Wärmeabtransport benützt werden. Es kann auch Wasser benutzt werden. Dem Wasser ist zweckmäßigerweise ein Rostschutzmittel hinzuzufügen.

Das vorliegende Verfahren unterscheidet sich auch von dem bekannten elektroerosiven Senken, mit dem metallische Werkstücke bearbeitet werden und bei denen die in das Werkstück sich absenkende Elektrode rotiert. Bei diesem elektroerosiven Senken findet ein rein elektrischer Abtrag statt, eine Berührung zwischen der Elektrode und dem Werkstück ist hierbei nicht vorgesehen und würde, falls dies zufällig stattfinden sollte, nicht zu einer Verbesserung des Bearbeitungsvorganges führen. Demgegenüber handelt es sich bei dem vorliegenden Verfahren um eine Kombination zwischen berührungsloser Funkenerosion und an den Stellen, an denen es erforderlich ist, um ein echtes Schleifen.

Außerdem bewegt sich das rotierende Werkzeug nicht in das Werkstück hinein, sondern es bewegt sich langs zur Ausdehnung des Werkstückes. Insofern besteht auch ein Unterschied zur Technik der Draht-Funkenerosion.

Vorzugsweise wird, wie schon erwähnt, bei der vorliegenden Erfindung ebenfalls eine Schleifscheibe benutzt. Diese enthält die nichtleitenden Hartpartikel in einer Metallbettung und wird in Rotation versetzt. Während der rotierenden Bearbeitung verbleibt die Schleifscheibe aber wie eine Elektrode im gesteuerten Abstand über dem Werkstück. Die Steuerung des Abstandes kann vorteilhafterweise in Abhängigkeit von den elektrischen Parametern der Funkenentladung selbsttätig erfolgen. Für einfache Bearbeitungen, beispielsweise zur Herstellung von Schneidflächen an Sägen, Bohrern oder Fräsern kann das Werkstück unter dem rotierenden Werkzeug eine hin- und hergehende Bewegung ausführen. Es sind aber auch andere Bahnbewegungen sowohl vom Werkzeug und/oder vom Werkstück möglich, um komplizierte Profile bearbeiten zu können. Diese Profilbahnen lassen sich von einem Programmspeicher aus automatisch steuern.

Deshalb lassen sich zur Steuerung der Zustellung in zumindest zwei Ebenen die bekannten Steuertechniken einsetzen, um nicht nur elektronisch abgespeicherte Formgebungsbewegungen nachzuvollziehen, sondern um, auch in Abhängigkeit von den elektrischen Parametern der Funkenstrecke Nachregelungen vorzunehmen, um den Materialabtrag zu optimieren. Zusätzlich kann aber auch die Winkelgeschwindigkeit des Werkzeugs in Abhängigkeit von den elektrischen Zustandsgrößen der Funkenstrecke geregelt oder nachgeregelt werden, um auch auf diese Weise den Materialabtrag zu optimieren, und zwar sowohl im Hinblick auf eine verbesserte Oberflächengüte wie auch auf eine rationelle Fertigung.

Wird beim Abtasten der elektrischen Parameter an der Funkenstrecke eine Veränderung festgestellt, die elektrisch oder über eine elektronische Auswertschaltung als das Erfassen eines nichtleitenden Bereichs identifizierbar ist, so geht der elektrische berührungslose Abtrag automatisch in einen sehr kurzzeitigen mechanischen Kontaktabtrag über, um auch die nichtleitenden Bereiche in die beabsichtigte Formgebung einzuschließen.

Normalerweise wird das Werkstück, abgesehen von einer Indexbewegung in den Bearbeitungspausen, während der Bearbeitung stillstehen. Nach einer Ausgestaltung der Erfindung ist es jedoch möglich, bei der Herstellung von rotationssymmetrischen Werkzeugen aus einem Werkstück dieses Werkstück rotieren zu lassen. Hierbei kann eine zum Bearbeitungswerkzeug gleichläufige oder gegenläufige Rotation stattfinden. Die dadurch entstehende relative Winkelgeschwindigkeit kann auch über einen Bearbeitungsvorgang variiert werden. So ist es beispielsweise möglich, für eine intensive elektroerosive Bearbeitung eines metallischen Bereichs die relative Umfangsgeschwindigkeit an der Bearbeitungsstelle klein werden zu lassen, wenn dies den elektrischen Abtrag begünstigt und die relative Geschwindigkeit groß werden zu lassen, wenn dadurch der mechanische Abtrag begünstigt wird.

In der Erprobung hat es sich gezeigt, daß die Übergänge zwischen den beiden Bearbeitungsarten sich in kürzester Zeit und vollständig selbsttätig so vollziehen, daß diese Übergänge ohne besondere Messung an der Maschine nicht wahrnehmbar sind. Es verändern sich zwar die Bearbeitungsgeräusche, da aber ohnehin ständig ein Geräuschwechsel durch das ständige Nachregeln erfolgt, ist der Übergang von der berührungslosen in den berührungshaften Bearbeitungszustand und umgekehrt nicht wahrnehmbar. Lediglich ein Wechsel in der Funkenfarbe kann kurzzeitig auftreten und als Zeichen der unterschiedlichen Bearbeitungsart wahrgenommen werden. Hingegen haben Untersuchungen der Oberflächengüte gezeigt, daß alle von den nichtleitenden Einschlüssen stammenden Rauhigkeiten geglättet sind.

Der Funkengenerator läßt sich auf verschiedene Frequenzen, Wellen oder Pulsformen einstellen. Die Spannung und der Strom kann ebenfalls den von Material sich ergebenden Erfordernissen eingestellt werden. Ferner kann in der von der Metallbearbeitung her bekannten Weise die Funkenstrecke mit einer einstellbaren Kapazität überbrückt werden.

In der Praxis hat sich gezeigt, daß die Bearbeitung soweit erfolgen kann, daß nach Herstellen der gewünschten 5 und durch Einstellen der verschiedenen elektrischen Parameter vorgebbaren Oberflächengüte diese Oberfläche dadurch versiegelt werden kann, daß abschließend auf der ganzen Fläche durch bloßes mechanisches Überarbeiten auf derselben Vorrichtung mit demselben Werkzeug eine dünne, nichtleitende Schicht hergestellt wird. Diese besteht bei Bearbeitung mit oder von künstlichen Diamanten aus reinem Kohlenstoff.

Weitere Einzelheiten, Merkmale und Vorteile der Erfindung ergeben sich aus der folgenden Beschreibung eines in der Zeichnung mit Abwandlungen dargestellten Ausführungsbeispiels.

Es zeigen :

Fig. 1 eine perspektivische Übersichtszeichnung einer nach der Erfindung aufgebauten Maschine ;

Fig. 2 im Detail das Zusammenwirken von Werkzeug und Werkstück ;

Fig. 3 ein gegenüber Fig. 2 abgewandeltes Detail mit einem anderen Werkzeug und einem anderen Werkstück ;

Fig. 4 bis 8 im schematischen Schnitt fünf aufeinanderfolgende Schritte eines Bearbeitungsganges ;

Fig. 9 ein schematisches Blockschaltbild und

Fig. 9a eine bevorzugte, von Funkengenerator erzeugte Wellenform ;

Fig. 10 ein beispielhaft wiedergegebenes Profil eines aus einem Werkstück herzustellenden rotationssymmetrischen Werkzeuges und

Fig. 11 eine abgewandelte Ausführungsform der Maschine mit einer Wanne als Spritzschutz oder für eine getauchte Bearbeitung.

In einem Maschinenständer 10 sind in üblicher Weise Werkstückschlitten 12 und 14 in X-Richtung gegeneinander verschiebbar angeordnet.

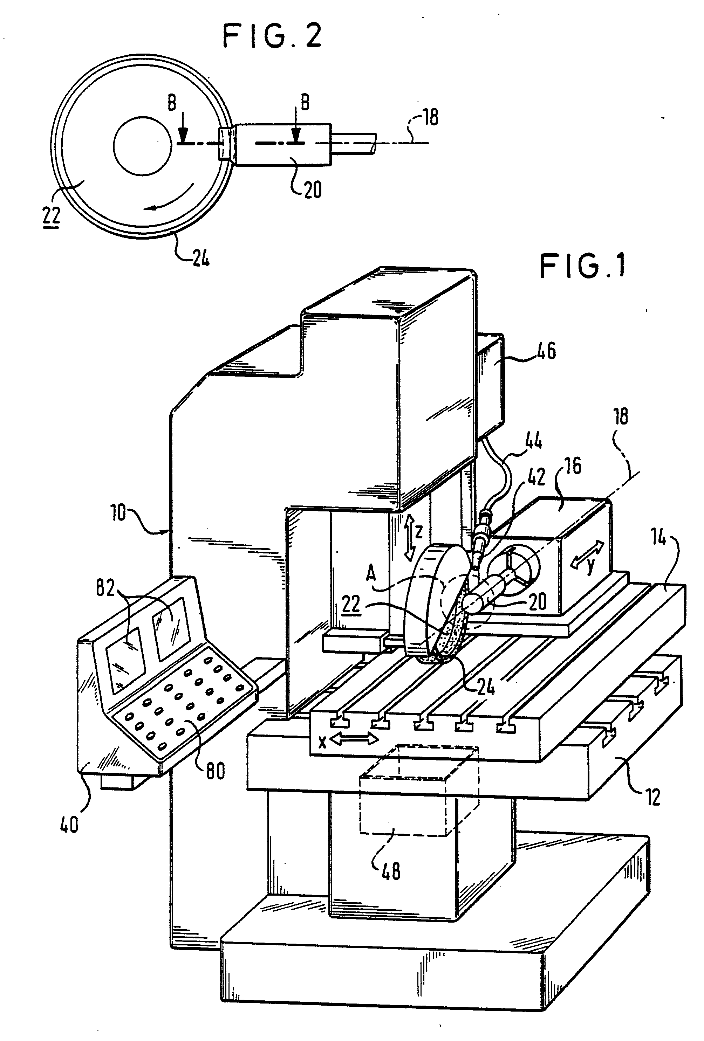

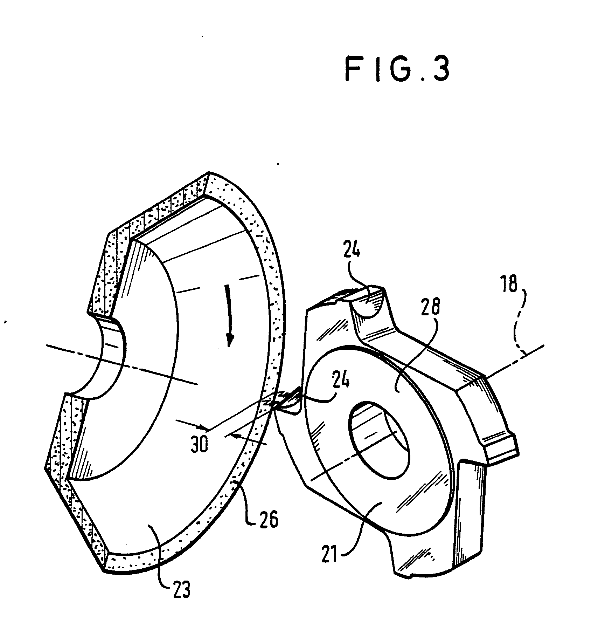

Gemäß dem hier dargestellten Beispiel trägt der Schlitten 14 einen auf diesen in Y-Richtung verfahrbaren Werkzeughalter 16, in dem ein um eine Achse 18 schwenkbares Werkstück 20 eingespannt ist. Gegenüber diesem Werkstück 20, aus dem im gezeichneten Beispiel ein Fingerfräser hergestellt werden könnte, ist ein Werkzeug 22 in X-Richtung bewegbar. In diesem Beispiel ist das Werkzeug eine Schleifscheibe mit abgewinkeltem Schleifrand 24, die von einem in dieser Darstellung nicht dargestellten Motor in Richtung des in der Detailzeichnung von Fig. 2 eingezeichneten Pfeils angetrieben wird. Eine andere Anwendung geht aus Fig. 3 hervor. Auf der Index-Achse befindet sich ein vierschneidiger Fräser 21 mit einem Metallhauptkörper 28, der Schneiden 24 aus Plättchen mit polykristallinen synthetischen Diamanten trägt. Diese werden mit Hilfe der Schleifscheibe, einer Topfscheibe 23 mit Schleiffläche 26, über einen Spalt 30 normalerweise elektroerosiv bearbeitet. Hierbei führt die Topfscheibe 23 eine Rotationsbewegung im Sinne des eingezeichneten Pfeils aus. Der Werkzeughalter 16 kann gleichzeitig eine hin- und hergehende Bewegung in Y-Richtung ausführen. Das Zustellen erfolgt in X-Richtung automatisch aufgrund von am Bedienungsbord 40 eingestellten Sollwerten. Die Steuerautomatik wird nachstehend näher anhand von Fig. g erläutert werden.

Zum Kühlen der Bearbeitungsstelle und zum Abführen des abgetragenen Materials dient ein unter Druck stehender Mediumsstrom, der von einer einstellbaren Düse 42 auf die Bearbeitungsstelle gerichtet ist. Die Düse 42 steht über eine Mediumsleitung 44 mit einem Mediumsvorrat 46 in Verbindung und unterhalb der Bearbeitungsstation wird das Medium in einem Behälter 45 aufgefangen und gesammelt. Das Medium kann ein leichter Elektrolyt oder ein Luftgemisch mit feinverteilten demineralisierten Wassertröpfchen sein, welche die elektrische Entladung nicht benachteiligen.

Mit Vorteil kann aber auch ein Schutzgas, beispielsweise Argon, als Medium angewendet werden.

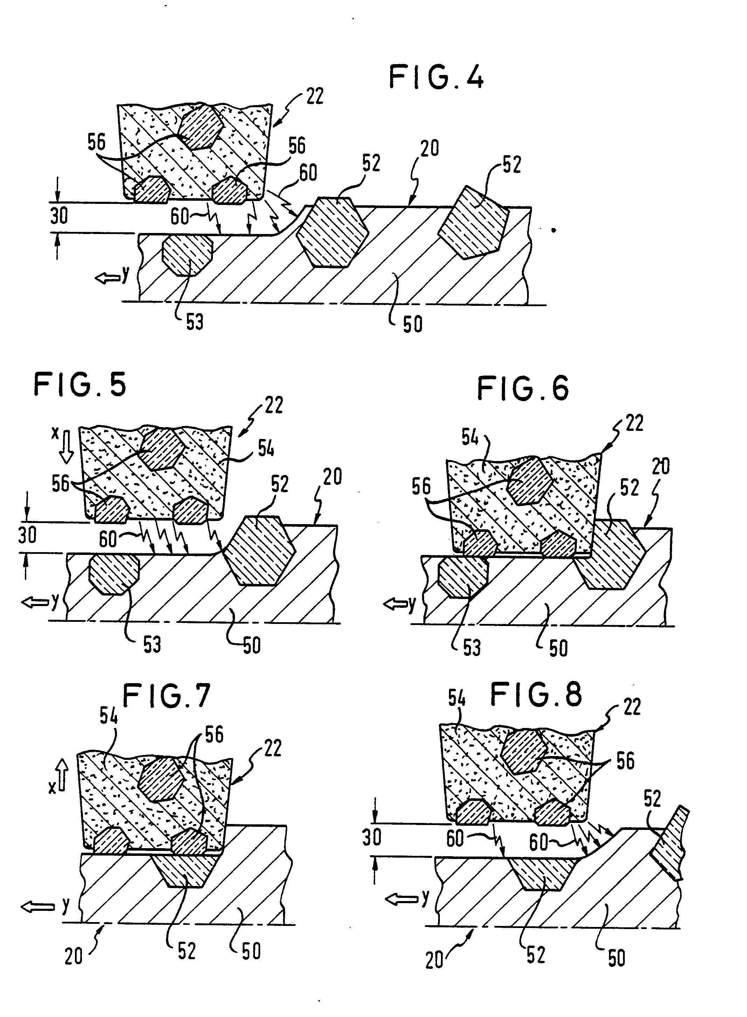

Der eigentliche Materialabtrag erfolgt gemäß Schnittzeichnungen Fig. 4 bis 8 zur Schnittlinie B-B in Fig. 2 nach den bisherigen, noch nicht gesicherten Erkenntnissen folgendermaßen :

Sowohl das Werkzeug 22 als auch das in Y-Richtung vorbeigeführte Werkstück 20 bestehen aus nichtleitenden Hartmaterialpartikeln in einer metallischen Bettung. Am Werkstück 20 sind schematisch in der Metallbettung 50 nichtleitende Einschlüsse 52 vorhanden. In einer elektrisch leitenden Umgebung 54 befinden sich nichtleitende Hartmaterialeinschlüsse 56 auch im Schleifwerkzeug 22. In Fig. 4 ist dargestellt, wie die Funken 60 vom metallischen Teil 54 über den Spalt 30 zum metallischen Bereich 50 überschlagen und diesen abtragen. Eine Zustellbewegung in Richtung der X-Achse erfolgt in diesem Augenblick nicht. Ein zuvor mechanisch abgetragener Teil 53 vom nichtleitenden Einschluß 52 ist mit gestrichelten Linien noch kenntlich gemacht, befindet sich aber nicht mehr im Spalt 30. Läßt die Funkenbildung bei fortschreitender Y-Bewegung nach, weil ein weiterer nichtleitender Bereich 52 erfaßt wird, so ändern sich die elektrischen Parameter und ggf. erfolgt selbsttätig ein Nachführen der Zustellung in X-Richtung (Fig. 5). Dies geht bis zum mechanischen Kontakt mit dem nächsten nichtleitenden Bereich 52, der gemäß Fig. 6 mechanisch abgetragen wird. Da hierbei weitgehend eine Berührung zwischen Nichtleiter und Nichtleiter stattfindet, bis es ggf. zu einem unmittelbaren Kontakt auch von leitenden Teilen 54 mit leitenden Teilen 50 kommt, läßt sich hieraus ein elektrisches Signal gewinnen, welches eine Rückstellbewegung in X-Richtung einleitet (Fig. 7) und zum reinen elektroerosiven Bearbeiten über einen vorgegebenen Spalt 30 (Fig. 8) überleitet. Der Wechsel zwischen elektrischer und ganz kurzzeitiger mechanischer Bearbeitungsweise erfolgt sehr schnell und ist bei einer Drehzahl des Werkzeugs zwischen 500 bis 800 Umdrehungen/min nicht direkt wahrnehmbar.

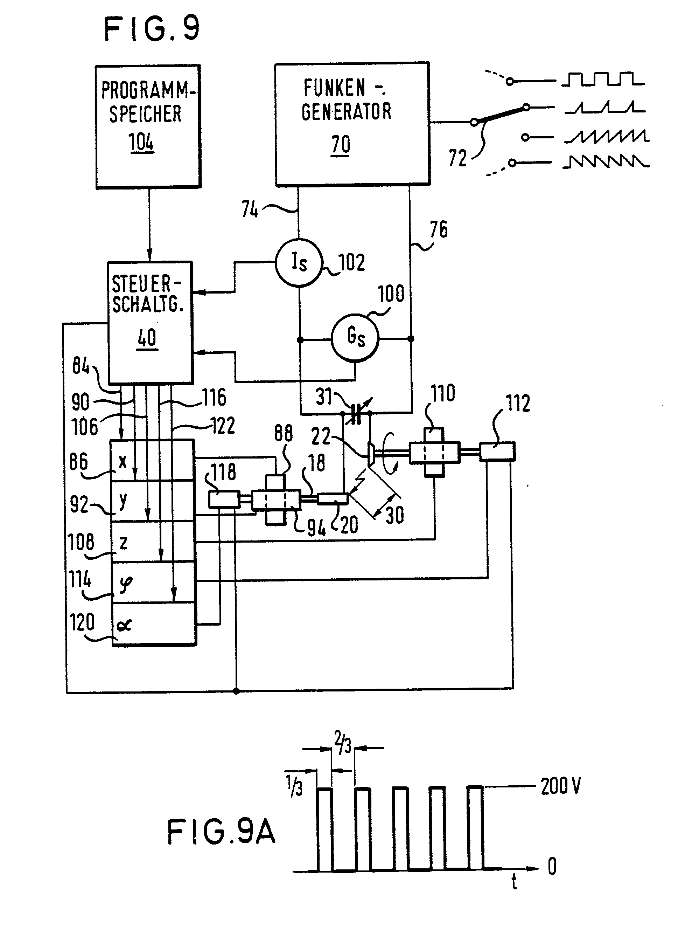

Aus Fig. 9 geht schematisch die elektrische Steuerung hervor. Ein Funkengenerator 70 ist mit einem Wählhebel 72 auf verschiedene Pulsformen je nach zu bearbeitendem Material einstellbar. Die Frequenz ist zwischen 10 und 100 kHz einstellbar. Die Spannung liegt zwischen 100 und 300 Volt und korrespondiert mit der Relativgeschwindigkeit zwischen Werkzeug 22 und Werkstück 20. Die im Funkengenerator 70 aufbereitete elektrische Energie wird über Leitungen 74 und 76 an das Werkstück 20 bzw. an das Werkzeug 22 angelegt, die untereinander isoliert gehalten sind, so daß zwischen beiden ein Funken über den Spalt 30 überschlagen kann. Parallel zur Funkenstrecke 30 ist eine stufenweise einstellbare Kapazität 31 vorhanden, wie sie aus der Metallbearbeitung bekannt ist, um Anpassungen vorzunehmen.

Mit Hilfe der Steuerschaltung 40 können die notwendigen Zustellungen und Sollwerteinstellungen vorgenommen werden. Dies kann von Hand über eine Tasteneingabe 60 erfolgen, wobei die eingestellten Werte von Anzeigefeldern 82 (Fig. 1) abgelesen werden können.

Auf diese Weise kann über eine Leitung 84 eine Bewegung in der X-Achse mit Hilfe einer Signalumsetzung 86 und einer Stelleinrichtung 88 veranlaßt und kontrolliert werden. Diese Bewegung in der X-Achse dient im vorliegenden der Beispiel der Zustellung und der Steuerung des Spelt 30. Zum Nachregeln können die Änderungen der Spaltspannung Us über eine Meßvorrichtung 100 und alternativ oder gleichzeitig eine Spaltstromänderung Is über eine Meßvorrichtung 102 abgegriffen und der Steuerschaltung 40 zur Auswertung zugeleitet werden.

Das Zustellen des Werkzeuges kann in Abhängigkeit des Stroms 102 geregelt werden. Der einem Strom zur Funkenstrecke 30 proportionale Wert kann einem Komparator zugeführt werden, in dem mit einem einstellbaren Sollwert verglichen wird. So lange der Strom noch hoch ist und damit Signal für eine intensive Bearbeitung während einer in Y-Richtung erfolgenden Bewegung ist, erfolgt keine weitere Zustellung in X-Richtung. Erst wenn sich im Komparator ergibt, daß genügend wenig Strom fließt, erfolgt eine weitere Zustellung in X-Richtung und damit ein tieferes Eindringen in die Werkstückoberfläche. Mit Vorwahl der verschiedenen Schwellenwerte kann der Bearbeitungsgrad von grober bis feinster Bearbeitung voreingestellt werden.

Über eine Steuerleitung 90 und einen Signalumsetzer 92 wird ein Stellmotor 94 für die Bewegung längs der Y-Achse abgesteuert. Dieser Stellmotor 94 kann beim Bearbeiten von geraden Schneiden eine hin- und hergehende Bewegung ausführen. Das Ausmaß der hin- und hergehenden Bewegung kann von einem Programmspeicher 104 oder von den rückgekoppelten elektrischen Werten 100,102 der Funkenstrecke über die Steuerschaltung 40 abgegriffen werden. Es ist aber auch eine einfache Umsteuerung durch Endschalter möglich.

Mit der Leitung 106 wird ein Z-Signal an eine Steuerschaltung I08 angelegt, von welcher ein Stellmotor 100 für die Höhenverstellung des Werkzeuges 22 beeinflußt wird.

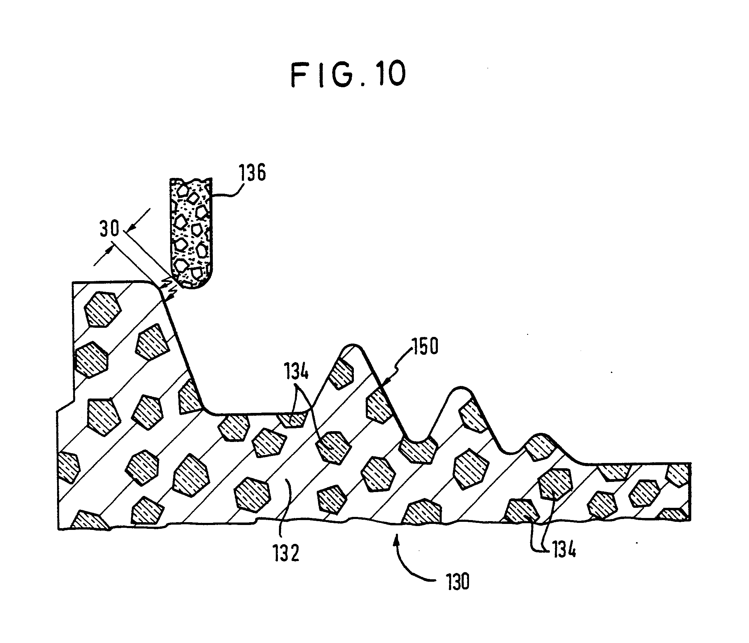

Schließlich kann die Drehzahl eines Antriebsmotors 112 für das Werkzeug 22 über ein φ-Signal, welches in der Schaltung 114 erzeugt wird, in Abhängigkeit von einem über eine Leitung 116 angelegten Signal geregelt werden. Sofern das Werkstück 20 nach jeder Bearbeitungsstufe mit einer Indexbewegung in eine andere Position zu bringen ist, wird ein Motor 118 als Indexmotor ausgelegt und von einer Steuerschaltung 120 entsprechend eines an eine Leitung 122 angelegten α-Signals gesteuert. Wie oben aber angedeutet, kann der Motor 118 auch als ständig drehender Antrieb ausgelegt sein, wenn das Werkstück 20 als Rotationskörper bearbeitet werden soll und er um seine Achse bei seiner Bearbeitung rotieren soll. Insbesondere rotationssymmetrische Werkzeuge können mit einem im Programmspeicher 104 abgelegten Programm beispielsweise gemäß Fig. 10 mit einem Profil versehen werden. In dieser Derstellung ist schematisch ein Werkstück 130 mit nichtleitenden harten Einschlüssen 134 in einer Metallbettung 132 dargestellt, welches mit Hilfe eines Werkzeugs 136 ein Profil 150 erhalten soll. Zu diesem Zweck wird für das Profil 150 analog oder digital ein Programm erstellt, das aus dem Programmspeicher 104 abrufbar ist, sobald das Werkstück 130 auf der Achse 118 eingespannt und eingerichtet ist. Der Motor 118 treibt dann das Werkstück und der Motor 112 das Werkzeug 136 an, welches normalerweise mit dem Spalt 30 über des Profil 150 entsprechend den Steuersignalen geführt wird.

In Fig. 9a ist eine bevorzugte Pulsform dargestellt, die vom Funkengenerator 70 an die Funkenstrecke 30 geliefert wird. Es hat sich als günstig herausgestellt, eine Pulsfolge zu wählen, die über ein Drittel der Periode ein und über zwei Drittel der Periode ausgeschaltet ist. Ein derartiger Funken sorgt für einen optimalen Materialabtrag.

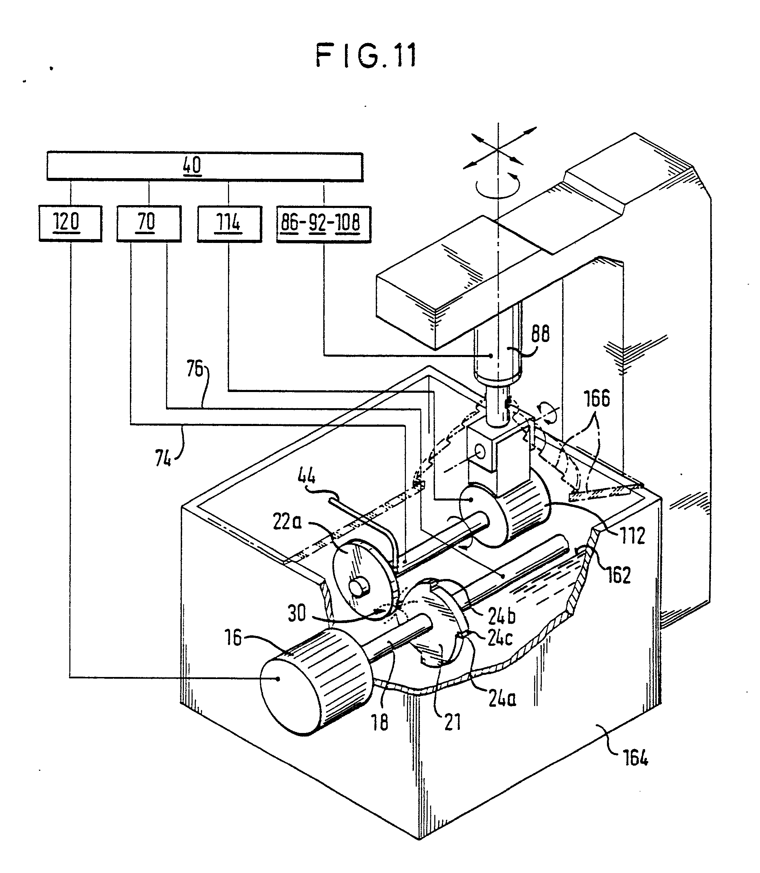

Die Fig. 11 zeigt eine abgewandelte Ausführungsform mit einem Werkzeug 21, das der Fig. 3 etwa entspricht. Die die polykristallinen künstlichen Diamanten enthaltenden Segmente 24a können je nach Verwendungszweck des Werkzeugs 21 mit in ihrer Betriebsstellung in Drehrichtung des Werkzeugs 21 vorn liegenden Stirnflächen 24b oder mit ihren Umfangsflächen 24c oder mit beiden Flächen 24b und 24c zugleich eingesetzt werden.

Die vorliegende Erfindung richtet sich auf die Bearbeitung dieser hier beispielshaft wiedergegebenen Stirnflächen 24b oder Umfangsflächen 24c. Die nachfolgende Beschreibung bezieht sich auf die Bearbeitung der Umfangsfläche 24c. Es ist aber verständlich, daß ebensogut bei einer anderen Stellung der Teile der Vorrichtung zueinander auch die Stirnfläche 24b in gleicher Weise bearbeitet werden kann. Um das Werkzeug 21 in die Bearbeitungsposition zu bringen, ist das Werkzeug 21 auf eine Achse 18 aufgesteckt. Die Achse 18 ist mit einer von Hand oder automatisch verstellbaren Indexeinrichtung 16 verbunden, welche das Werkzeug vor jeder Bearbeitung in gewünschter Weise und genau positioniert.

Die Indexeinrichtung 16 ist hier schematisch als automatisch gesteuerte Indexeinrichtung dargestellt, weshalb sie über ein elektrisches Kabel mit der zuvor beschriebenen Steuerschaltung 120 verbunden ist.

In der dargestellten Position findet eine funkenerosive Bearbeitung der in der Zeichnung links stehenden Umfangsfläche 24c statt. Für die funkenerosive Bearbeitung wird nicht im herkömmlichen Sinne eine stehende Elektrode, sondern eine rotierende Elektrode 22a benutzt, die vorteilhafterweise selbst ein mit polykristallinen Diamanten besetztes Werkzeug sein kann. Im dargestellten Beispiel handelt es sich um eine metallgebundene Schleifscheibe 22a mit künstlichen Diamanten. Diese Schleifscheibe 22a sitzt auf einer Welle, welche von dem elektrischen Antrieb 112 in Rotation gesetzt wird. Die Steuerung dieser Rotation und damit die Regelung der Drehzahl der Schleifscheibe 22a erfolgt über die Steuerschaltung 114, die den elektrischen Antrieb 112 vorzugsweise mit Gleichspannung versorgt. Die Gleichspannung wird deshalb gewählt, um die Möglichkeit zu nutzen, klein zu bauen und um eine gute Regelbarkeit zu gewährleisten. Außerdem kann mit Niederspannung gearbeitet werden, was die Isolationsprobleme verringert, weil der Antrieb 112 und die Schleifscheibe 22a in diesem Beispiel zumindest teilweise oder sogar vollständig getaucht arbeitsfähig sein sollen.

Die mechanische Einheit aus Schleifscheibe 22a und Antrieb 112 ist an einem steuerbar beweglichen Arm 38 aufgehängt. Die Bewegungsmöglichkeiten sind durch eingezeichnete Pfeile angedeutet. Die Regelung des Ablaufs bestimmter Bearbeitungs- oder Zuführungs- und Wegführungsbewegungen erfolgen über die Steuerschaltungen 86, 92 und 108, an welche der Steuerarm 88 angeschlossen ist.

Im dargestellten Fall findet während der Bearbeitung der Umfangsfläche 24c auf dem Werkzeug 21 durch Funkenerosion mittels rotierender Schleifscheibe 22a eine axiale Bewegung in Richtung der Achse zum Antrieb 112 zusätzlich zur Rotation der Schleifscheibe 22a statt.

Für die Funkenerzeugung zwischen der Schleifscheibe 22a und der Umfangsfläche 24c ist ein Funkengenerator 70 vorgesehen, dessen elektrische Zuleitung 74 an die gegenüber den sonstigen Teilen isolierte Welle angelegt ist. Auf diese Weise leitet die Welle elektrisch der Schleifscheibe 22a den Strom zu und macht die Schleifscheibe 22a zu der einen Elektrode der funkenerosiven Bearbeitung. Die andere elektrische Zuleitung 76 vom Funkengenerator 70 führt zur gegenüber den anderen Teilen elektrisch isolierten Einheit aus Achse 18 und aufgesetztem und damit elektrisch verbundenen Werkzeug 21, welches auf diese Weise zur zweiten Elektrode für die Funkenerosion wird. Der Funkenüberschlag 30 sorgt zusammen mit der rotierenden Schleifbewegung, welche die nichtleitenden Teile der Diamantbettung erfaßt, für eine schnelle und äußerst genaue Bearbeitung.

Die Funkenfrequenz, die Drehzahl und das Maß, wie dicht die rotierende Elektrode 22a an der zu bearbeitenden Fläche 24c vorbeigeführt wird, und die Größe und Richtung der Bewegung der Welle in ihrer axialen Richtung lassen sich automatisch auf die optimalen oder gewünschten Werte programmierbar einregeln. Zu diesem Zweck sind die Steuerschaltungen 120,114,42,36,86,92, 108 und der Funkengenerator 70 über die Prozeßsteuereinrichtung 40 miteinander verbunden. So kann die Funkenfrequenz der Erosionsfunkenstrecke 30 über den Generator 70 mit der Steuerschaltung 114 für den Antrieb 112 in der Weise über die Einrichtung 40 gekoppelt sein, daß die Drehzahl des Antriebs 112 und die Funkenfrequenz sowie die Spannung optimal miteinander harmonieren. Die Funkenfrequenz wird von der Art und dem Umfang des rotierenden Werkzeugs 22a abhängen, und die Drehzahl des Antriebs 112 muß so eingeregelt werden, daß der Funken nicht abreißt oder nicht wieder zündet. Als Maß für die Nachregelung der Drehzahl kann die sich ändernde Funkenspannung oder der sich ändernde Funkenstrom benutzt werden.

Die funkenerosive Bearbeitung findet innerhalb einer Flüssigkeit 162 statt. Aus diesem Grunde befindet sich die Bearbeitungsstation mit dem zu bearbeitenden Werkzeug 21 und dem Bearbeitungswerkzeug 22a in einer mit der Flüssigkeit 162 gefüllten Wanne 164. Für eine besondere Zuleitung von Flüssigkeit unmittelbar an die Bearbeitungsstelle und für einen Abtransport von Wärme sorgt die einstellbare Direktzuleitung 44.

Wird die Bearbeitung in nicht vollständig geflutetem Zustand vorgenommen, werden von dem rotierenden Werkzeug 22a Flüssigkeitspartikel aufgewirbelt und deshalb ist die Wanne 164 mit einem Deckel 166 verschließbar. Innerhalb der Wanne 164 können das zu bearbeitende Werkzeug 21, das rotierende Bearbeitungswerkzeug 22a und deren Antrieb 112 angeordnet sein. Die Indexeinrichtung 16 kann sich außerhalb der Wanne 164 befinden. Auf eine elektrische Isolierung ist bei den Durchgängen durch die Wandung der Wanne 164 und den Deckel 166 zu achten. Im Deckel 166 kann eine balgartige Abdichtung vorgesehen werden, welche die durchragenden Teile des Steuerarmes 88 abdichtend umschließt, aber seine Beweglichkeit nicht behindert. Die Flüssigkeit 162 kann ein üblicher Elektrolyt, eine beliebige Schmierflüssigkeit oder ein beliebiges Kühlmittel sein. Es ist auch möglich, in einfachem Wasser zu arbeiten. Zweckmäßigerweise wäre einfachem Wasser ein Rostschutzmittel zum Schutz der Vorrichtung zuzugeben.

**Patentansprüche**

1. Verfahren zum Bearbeiten, wie Trennen, Formen, Nachformen, Schärfen oder Nachschärfen von Werkstücken oder Werkzeugen oder Werkzeugteilen aus metallgebundenen nichtleitenden Hartmaterialien wie künstlichen Diamanten oder Bornitriden mittels Elektroerosion, wobei das zu bearbeitende Stück eine Elektrode im Elektroerosivsystem darstellt, auf welches eine zweite Elektrode, welche bewegt wird, einwirkt, dadurch gekennzeichnet, daß als zweite Elektrode ein rotierendes, auch mechanisch wirkendes Werkzeug (22, 23, 136) benutzt wird, das selbst aus metallgebundenem nichtleitenden Hartmaterial besteht, und wobei es zunächst nicht zu einer mechanischen Berührung kommt, sondern über einen eingestellten kleinen Abstand zu einem aus dem Werkstück Material abtragenden Funkenüberschlag.

2. Verfahren nach Anspruch 1, dadurch gekennzeichnet, daß als rotierendes Werkzeug eine Schleifscheibe (22, 23, 136) benutzt wird.

3. Verfahren nach Anspruch 1 oder 2, dadurch gekennzeichnet, daß das Werkzeug (22, 23, 136) und das Werkstück (20, 21, 130) in drei Achsen (X, Y, Z) zueinander einstellbar angeordnet wird und daß die Rotationsbewegung des Werkzeugs (22, 23, 136) regelbar ist.

4. Verfahren nach einem der Ansprüche 1 bis 3, dadurch gekennzeichnet, daß eine Steuerschaltung (4) vorgesehen ist, welche in Abhängigkeit von Veränderungen an der Funkenspannung (Us) und/oder von Veränderungen des Funkenstroms (Is) die Größe des Funkenspalts (30) nachregelt.

5. Verfahren nach einem der Ansprüche 1 bis 4, dadurch gekennzeichnet, daß ein Funkengenerator (70) auf unterschiedliche Funkenspannungsverläufe einstellbar ist.

6. Verfahren nach einem der vorangehenden Ansprüche, dadurch gekennzeichnet, daß zum Herstellen von Profilen und/oder zum Steuern sich wiederholender Bearbeitungsbewegungen ein Programmspeicher (104) vorgesehen ist.

7. Verfahren nach Anspruch 6, dadurch gekennzeichnet, daß im Programmspeicher (104) die Steuerbewegung für eine profilierte Bearbeitung ablegbar ist.

8. Verfahren nach einem der Ansprüche 1 bis 7, dadurch gekennzeichnet, daß zwischen Werkstück (130) und Werkzeug (136) eine Relativbewegung stattfindet.

9. Verfahren nach Anspruch 8, dadurch gekennzeichnet, daß die Relativbewegung gleichsinnig oder gegensinnig ist.

10. Verfahren nach einem der Ansprüche 1 bis 9, dadurch gekennzeichnet, daß auf die Bearbeitungsstelle ein Mediumstrahl (42) gerichtet wird.

11. Verfahren nach Anspruch 10, dadurch gekennzeichnet, daß als Medium ein Schutzgas, beispielsweise Argon, benutzt wird.

12. Verfahren nach einem der Ansprüche 1 bis 11, dadurch gekennzeichnet, daß das Werkzeug (22, 23, 136) längs einer Bearbeitungskante (24b, 24c) am Werkstück (20, 21, 130) entlangt geführt wird.

13. Verfahren nach Anspruch 12, dadurch gekennzeichnet, daß die Zustellung quer zur Bearbeitungsrichtung in Abhängigkeit vom Strom (102) in der Funkenstrecke erfolgt.

14. Verfahren nach einem der Ansprüche 1 bis 13, dadurch gekennzeichnet, daß mit dem Funkengenerator (70) ein Funken (30) erzeugt wird, der über ein Drittel einer Periode ein und über zwei Drittel der Periode ausgeschaltet wird.

15. Verfahren nach einem der Ansprüche 1 bis 14, dadurch gekennzeichnet, daß in einer allseits geschlossenen Wanne (164) mit Flüssigkeitsfüllung (162) die zu bearbeitende Fläche (24c) mittels Indexeinrichtung (16) in eine Bearbeitungsposition zugestellt wird, in welcher sie gegenüber einer längs vorbeibewegbaren Einheit aus rotierendem Bearbeitungswerkzeug (22a) mit zugehörigem Antrieb (12) für eine Bearbeitungsperiode ortsfest angeordnet wird.

16. Verfahren nach Anspruch 15, dadurch gekennzeichnet, daß innerhalb der Wanne (164) alle Teile vollständig geflutet werden.

17. Verfahren nach Ansprüchen 15 und 16, dadurch gekennzeichnet, daß die Einheit aus Antrieb (112) und rotierendem Werkzeug (22a) an einem Steuerarm (88) aufgehängt wird und daß in Abhängigkeit von einer Steuerschaltung (87, 92, 108) mit dem Steueram (88) das rotierende Werkzeug (22a) zu- und weggestellt sowie längs einer vorgegebenen Bahn parallel zum Profil der zu bearbeitenden Fläche (24c) geführt wird.

18. Vorrichtung nach Anspruch 17, dadurch gekennzeichnet, daß der Steuerarm durch einen flexiblen Teil in einer Abdeckung (166) der Wanne (164) in diese hineinragt.

19. Verfahren nach Anspruch 14, dadurch gekennzeichnet, daß der Funkengenerator (70) und eine Steuerschaltung (114) für den Antrieb (112) des rotierenden Werkzeugs (22a) miteinander verbunden werden, und daß die sich ändernden elektrischen Größen des Funkens (40) als ein Maß für die Einstellung und/oder Nachregulierung der Drehzahl des Antriebs (112) benutzt werden.

20. Verfahren nach Anspruch 14, dadurch gekennzeichnet, dan der Funkengenerator (70) mit der Steuerschaltung (40) verbunden wird und daß die sich ändernden elektrischen Größen (100, 102) des Funkens (30) als ein Maß für eine Nachregulierung der Bahnbearbeitungsführung benutzt werden.

21. Verfahren nach Anspruch 20, dadurch gekennzeichnet, daß die sich ändernden elektrischen Größen (100, 102) des Funkens (30) als Maß für das Zustellen des rotierenden Werkzeugs (22) und/oder die Auslösung der Indexeinrichtung (16) über eine verbindende Steuerschaltung (40) benutzt werden.

22. Verfahren nach Ansprüchen 15 und 16, dadurch gekennzeichnet, daß als Füllung (162) ein Elektrolyt oder Wasser mit oder ohne Rostschutzzusatz verwendet wird.

23. Verfahren nach Anspruch 1 oder 2, dadurch gekennzeichnet, daß das auch mechanisch wirkende Werkzeug (22,23,136) Diamanten enthält.

24. Verfahren nach Anspruch 23, dadurch gekennzeichnet, daß die Diamanten polykristalline künstliche Diamanten sind.

25. Verfahren nach einem der Ansprüche 1 bis 14, dadurch gekennzeichnet, daß nach dem Herstellen einer durch Einstellen elektrischer Parameter des Funkenstroms (Us, Is) vorgebbaren Oberflächengüte des Werkstücks (20, 21, 130) diese Oberfläche mit demselben Werkzeug (22, 23, 136) bloß mechanisch überarbeitet wird.

**Claims**

1. Method for the machining, such as severing, forming, postforming, sharpening or resharpening, of workpieces or tools or tool parts made from metal-bonded non-conducting hard materials such as artificial diamonds or boron nitrides by means of electroerosion, the piece to be machined representing one electrode in the electroerosive system, on which a second electrode acts which is moved, characterised in that there is used as the second electrode a rotating tool (22, 23, 136) which also has a mechanical action and which itself consists of metalbonded non-conducting hard material, and in the first instance no mechanical contact occurs but instead, over a preset small spacing, a spark flashover which removes material from the workpiece.

2. Method according to claim 1, characterised in that a grinding wheel (22, 23, 136) is used as the rotating tool.

3. Method according to claim 1 or 2, characterised in that the tool (22, 23, 136) and the workpiece (20, 21, 130) are arranged to be adjustable relatively to one another on three axes (X, Y, Z), and that the rotational movement of the tool (22, 23, 136) is variable.

4. Method according to one of claims 1 to 3, characterised in that a control circuit unit (4) is provided which readjusts the size of the spark gap (30) in dependence on variations at the spark voltage (Us) and/or on variations in the spark current (Is).

5. Method according to one of claims 1 to 4, characterised in that a spark generator (70) is adjustable to various spark voltage patterns.

6. Method according to one of the preceding claims, characterised in that a programme register (104) is provided for the production of profiles and/or for the control of machining movements which are repeated.

7. Method according to claim 6, characterised in that the control movement for profiled machining can be filed in the programme register (104).

8. Method according to one of claims 1 to 7, characterised in that a relative movement occurs between workpiece (130) and tool (136).

9. Method according to claim 8, characterised in that the relative movement is in the same direction or in opposite directions.

10. Method according to one of claims 1 to 9, characterised in that a jet (42) of a medium is directed on to the machining site.

11. Method according to claim 10, characterised in that an inert gas, for example argon, is used as the medium.

12. Method according to one of claims 1 to 11, characterised in that the tool (22, 23, 136) is guided along a machining edge (24b, 24c) on the workpiece (20, 21, 130).

13. Method according to claim 12, characterised in that feed is effected transversely to the machining direction in dependence on the current (102) in the spark gap.

14. Method according to one of claims 1 to 13, characterised in that with the spark generator (70) there is produced a spark (30) which is made active over a third of a period and is made inoperative over two-thirds of the period.

15. Method according to one of claims 1 to 14, characterised in that in a trough (164) closed on all sides, with a liquid filling (162), the surface (24c) to be machined is fed by means of an indexing device (16) into a machining position in which it is in a stationary situation for one machining period relatively to a unit which is adapted to move along past and which comprises a rotating machining tool (22a) with an associated drive (12).

16. Method according to claim 15, characterised in that all the parts within the trough (164) are fully immersed.

17. Method according to claims 15 and 16, characterised in that the unit comprising drive (112) and rotating tool (22a) is suspended on a control arm (88), and that in dependence on a control circuit arrangement (87, 92, 108), with the control arm (88), the rotating tool (22a) is fed-in and withdrawn and also guided along a predetermined path parallel to the profile of the surface (24c) being machined.

18. Device according to claim 17, characterised in that the control arm projects through a flexible portion in a cover (166) of the trough (164) into the latter.

19. Method according to claim 14, characterised in that the spark generator (70) and a control circuit (114) for the drive (112) of the rotating tool (22a) are connected to one another, and that the varying electrical quantities of the spark (40) are used as a measure of the adjustment and/or the readjustment of the rotational speed of the drive (112).

20. Method according to claim 14, characterised in that the spark generator (70) is connected to the control circuit unit (40), and that the varying electrical quantities (100, 102) of the spark (30) are used as a measure for readjustment of the path guide arrangement.

21. Method according to claim 20, characterised in that the varying electrical quantities (100, 102) of the spark (30) are used as a measure for the feed of the rotating tool (22) and/or the tripping of the indexing device (16) through a connecting control circuit unit (40).

22. Method according to claims 15 and 16, characterised in that an electrolyte or water with or without rust-preventing additives is used as the filling (162).

23. Method according to claim 1 or 2, characterised in that the tool (22, 23, 136) which also has a mechanical action contains diamonds.

24. Method according to claim 23, characterised in that the diamonds are polycrystalline artificial diamonds.

25. Method according to one of claims 1 to 14, characterised in that after the production of a surface quality on the workpiece (20, 21, 130) predeterminable by the adjusting of electrical parameters of the spark current (Us, Is), this surface is worked-over purely mechanically with the same tool (22, 23, 136).

**Revendications**

1. Procédé pour l'usinage, par séparation, façonnage, reproduction, affûtage ou rectification de pièces, d'outils ou de parties d'outils en matière dure non-conductrice liée à du métal, tel que des diamants synthétiques ou de nitrure de bore, par électro- érosion, dans lequel la pièce à usiner constitue, dans un système d'électro-érosion, une électrode sur laquelle agit une seconde électrode à laquelle on imprime un mouvement, ce procédé étant caractérisé en ce que l'on utilise en tant que seconde électrode un outil rotatif (22, 23, 136) qui agit aussi mécaniquement et se compose lui-même d'une matière non-conductrice liée à du métal, de façon à ne pas établir tout d'abord un contact mécanique mais à produire, à travers une faible distance prédéterminée, l'éclatement d'étincelles qui produit l'enlèvement de matière sur la pièce à usiner.

2. Procédé selon l'une ou l'autre des Revendications 1 et 2, caractérisé en ce que l'on utilise une meule (22, 23, 136) en tant qu'outil rotatif.

3. Procédé selon l'une ou l'autre des Revendications 1 ou 2, caractérisé en ce que l'outil (22, 23, 136) et la pièce à usiner (20, 21, 130) sont disposés de façon réglable selon trois axes (X, Y, Z) et que le mouvement de rotation de l'outil (22, 23, 136) est réglable.

4. Procédé selon l'une quelconque des Revendications 1 à 3, caractérisé en ce qu'il est prévu une commande de commutation (4) qui règle l'écartement entre électrodes où se produisent les étincelles (30) en fonction des variations de la tension d'étincelles (Us) et/ou des variations du

courant d'étincelles (Is).

5. Procédé selon l'une quelconque des Revendications 1 à 4, caractérisé en ce qu'un générateur d'étincelles (70) est réglable selon différentes valeurs de tension d'étincelles.

6. Procédé selon l'une quelconque des Revendications 1 à 5, caractérisé en ce qu'il est prévu une mémoire de programme (104) pour réaliser des profils et/ou commander des mouvements d'usinage répétitifs.

7. Procédé selon La Revendication 6, caractérisé en ce que l'on peut enregistrer dans la mémoire de programme (104) le mouvement de commande pour réaliser un usinage profilé.

8. Procédé selon l'une quelconque des Revendications 1 à 7, caractérisé en ce qu'il se produit un mouvement relatif entre la pièce à usiner (130) et l'outil (136).

9. Procédé selon la Revendication 8, caractérisé en ce que ce mouvement relatif est de même sens ou de sens contraire.

10. Procédé selon l'une quelconque des Revendications 1 à 9, caractérisé en ce que l'on dirige un jet (42) vers la zone d'usinage.

11. Procédé selon la Revendication 10, caractérisé en ce que l'on utilise en tant que jet un gaz de protection, par exemple de l'argon.

12. Procédé selon l'une quelconque des Revendications 1 à 11, caractérisé en ce que l'outil (22, 23, 136) est guidé le long d'une arête d'usinage (24b, 24c) de la pièce à usiner (20, 21, 130).

13. Procédé selon la Revendication 12, caractérisé en ce que l'avance s'effectue transversalement au sens d'usinage en fonction du courant (102) dans l'intervalle de décharge.

14. Procédé selon l'une quelconque des Revendications 1 à 13, caractérisé en ce que l'on produit avec le générateur d'étincelles (70) une étincelle (30) en circuit pendant un tiers d'une période et hors-circuit pendant deux tiers de la période.

15. Procédé selon l'une quelconque des Revendications 1 à 14, caractérisé en ce que, dans une cuve (164) fermée de tous côtés et remplie d'un liquide (162), la surface à usiner (24c) avance grâce à un dispositif d'indexation (16) jusqu'à une position d'usinage dans laquelle cette surface est bloquée pendant une période d'usinage par rapport à une unité longitudinalement mobile comprenant un outil rotatif d'usinage (22a) et son dispositif d'entraînement (112).

16. Procédé selon la Revendication 15, caractérisé en ce que, à l'intérieur de la cuve (164)), tous les organes sont entièrement immergés.

17. Procédé selon l'une ou l'autre des Revendications 15 ou 16, caractérisé en ce que l'unité comprenant le dispositif d'entraînement (112) et l'outil rotatif (22a) est suspendue à un bras de commande (88), et que, en fonction de la condition où se trouve un commutateur de commande (86, 92, 108) agissant sur le bras de commande (88), l'outil rotatif (22a) est rapproché ou éloigné, et guidé, dans un cas comme dans l'autre, le long d'une trajectoire pré-établie, parallèle au profil de la surface à usiner (24c).

18. Procédé selon la Revendication 17, caractérisé en ce que le bras de commande (88) pénètre dans la cuve (164) par l'intermédiaire d'un élément souple qui traverse le couvercle (166) de la cuve.

19. Procédé selon la Revendication 14, caractérisé en ce que le générateur d'étincelles (70) et commutateur de commande (114) du dispositif d'entraînement (112) de l'outil rotatif (22a) sont reliés entre eux, et que les valeurs électriques variables des étincelles (30) sont utilisées en tant que mesure pour fixer et/ou régler à postériori le nombre de tours dudit dispositif d'entraînement (112).

20. Procédé selon la Revendication 14, caractérisé en ce que le générateur d'étincelles (70) est relié au commutateur de commande (40) et que les valeurs électriques variables (100, 102) des étincelles (30) sont utilisées en tant que mesure pour réajuster le guidage de la passe d'usinage.

21. Procédé selon la Revendication 20, caractérisé en ce que les valeurs électriques variables (100, 102) des étincelles (30) sont utilisées en tant que mesure pour le réglage de l'outil rotatif (22) et/ou pour désaccoupler le dispositif d'indexation (16) par l'intermédiaire d'un commutateur de commande (40).

22. Procédé selon l'une ou l'autre des Revendications 15 ou 16, caractérisé en ce que le liquide de remplissage (162) de la cuve (164) est un électrolyte ou de l'eau avec ou sans additif anticorrosion.

23. Procédé selon l'une ou l'autre des Revendications 1 ou 2, caractérisé en ce que l'outil (22, 23, 136) qui agit également de façon mécanique contient des diamants.

24. Procédé selon la Revendication 23, caractérisé en ce que les diamants sont des diamants synthétiques polycristallins.

25. Procédé selon l'une quelconque des Revendications 1 à 14, caractérisé en ce qu'après l'obtention d'une qualité de surface désirée de la pièce à usiner (20, 21, 130), grâce au réglage approprié des paramètres électriques du courant d'étincelles (Us, Is), cette surface est usinée de façon complémentaire et simplement mécanique en utilisant le même outil (22, 23, 136).

FIG.2

FIG.1

# FIG.3

24

28

18

24

30

26

21

23

FIG.4

FIG.5

FIG.6

FIG.7

FIG.8

# FIG. 9

**FIG. 9A**

# FIG. 10

# F I G . 11